Europäisches Patentamt

European Patent Office

Office européen des brevets

(11) Veröffentlichungsnummer: **0 553 663 B1**

(12) # EUROPÄISCHE PATENTSCHRIFT

(45) Veröffentlichungstag der Patentschrift: **03.05.95**

(51) Int. Cl.6: **C09D 167/08**, C09D 5/04, C08G 18/42, C08G 18/66, C08G 18/76

(21) Anmeldenummer: **93100557.3**

(22) Anmeldetag: **15.01.93**

(54) **Verfahren zur Herstellung von thixotropen Lackbindemitteln auf Alkydharzbasis.**

(30) Priorität: **28.01.92 DE 4202229**

(43) Veröffentlichungstag der Anmeldung:
**04.08.93 Patentblatt 93/31**

(45) Bekanntmachung des Hinweises auf die Patenterteilung:
**03.05.95 Patentblatt 95/18**

(84) Benannte Vertragsstaaten:
**AT BE DE ES FR GB IT NL**

(56) Entgegenhaltungen:
**CH-A- 485 829**
**DE-A- 2 359 923**

(73) Patentinhaber: **BAYER AG**

**D-51368 Leverkusen (DE)**

(72) Erfinder: **Höhlein, Peter, Dr.**
**Windmühlenweg 3e**
**W-4152 Kempen 3 (DE)**
Erfinder: **Arning, Eberhard, Dipl.-Ing.**
**Krefelder Strasse 39**
**W-4044 Kaarst (DE)**
Erfinder: **Riberi, Bernd, Dr.**
**Im Alten Driesch 1**
**W-5068 Odenthal-Osenau (DE)**

**Beschreibung**

Die Erfindung betrifft ein neues Verfahren zur Herstellung von thixotropen Bindemitteln auf Alkydharzbasis und ihre Verwendung als Bindemittel in Beschichtungsmitteln.

Thixotrope Alkydharze sind seit langer Zeit bekannt. Sie werden in der Regel durch Verkochung mit modifizierten Oligo- bzw. Polyamiden hergestellt. Dabei gibt es die besondere Schwierigkeit, den optimalen Endpunkt der Umamidierungsreaktion zu finden. Eine zu geringe Reaktionsdauer führt zu thixotropen, aber trüben Produkten. Eine zu lange Reaktionsdauer ergibt klare Harze aber mit geringer Thixotropie, (s.W. Götze, Fette, Seifen, Anstrichmittel (1965), S. 493 ff.). Es sind vielfältige Versuche unternommen worden diese Schwierigkeiten beherrschbar zu machen. So wird in der EP-A-0 035 666 ein Verfahren beschrieben, thixotrope Modifikatoren auf Basis eines polyamid- und urethanmodifizierten Alkydharzes zu erzeugen, die durch Umsetzung niedermolekularer Alkydharze mit einem Dimerfettsäurepolyamid, einem Isocyanat und einem Amin hergestellt und die in einem zweiten Schritt in das zu thixotropierende langölige Alkydharz eingearbeitet werden. Optisch klare, thixotrope Mischungen lassen sich so nicht erzeugen. Auch die vielen Versuche, Alkydharze durch Einarbeitung von Thixotropieträgern mit Harnstoffgruppen herzustellen, wie sie z.B. in der DE-OS 2 359 923 beschreiben sind, fuhren zu lufttrocknenden Alkydharzen, die trübe Losungen ergeben und die daher als Alleinbindermittel zur Herstellung von hochglänzenden Lackfilmoberflächen ungeeignet sind. Im Falle klarer Produkte zeigen die Beispiele entweder eine schwere Verrührbarkeit oder eine zu geringe Thixotropie. Die Verwendung aromatischer Amine erscheint aus heutiger Sicht bedenklich. Auch wird der Einsatz aromatenhaltiger Lacklösemittel in solchen Bindemitteln immer weniger toleriert.

In der DE-AS 1 669 137 werden Anstrichmittel mit thixotropen Eigenschaften beschrieben, die auf Basis von ofen- und lufttrocknenden bzw. säurehartenden Alkydharzen aufgebaut sind und 1 bis 30 Gew.-% Polyurethane aus Diisocyanaten mit zu allen NCO-Gruppen nachbarständigen Alkylgruppen und Diolen, bevorzugt 1.3.5-Triisopropylbenzol-2.4-diisocyanat und Octadecen-9,10-diol-1,12 und/oder Octadecandiol-1.2, als Thixotropieträger enthalten.

Dabei wird der Thixotropieträger separat hergestellt und nachträglich in das Alkydharz bei Temperaturen von 50 bis 250°C, vorzugsweise 120 bis 160°C, eingeschmolzen. Auf diese Weise können klare Alkydharzlösungen mit thixotropen Eigenschaften erzeugt werden.

Allerdings ist diese Art der Thixotropierung auf niedrig- und mittelölige Alkydharze beschränkt, die, wie die Beispiele zeigen, maximale Ölgehalte von 48 Gew.-% aufweisen. Langölige Alkydharze mit Ölgehalten über 50 Gew.-% zeigen bei dieser Art der Thixotropierung ungenügende Glanzwerte und sind deswegen als Alleinbindemittel in Maler- und DIY-Lacken nicht einsetzbar. Aber auch die so hergestellten niedrig- und mittelöligen Alkydharze benötigen zur Erzielung eines ausreichenden Thixotropierungseffektes zwischen 17,6 und 25,0 Gew.-% (Beispiele DE-AS 1 669 137) der Polyurethanverbindungen.

Es stellte sich somit die Aufgabe, thixotrope Lackbindemittel zu entwickeln, die nach einem einfachen reproduzierbaren Verfahren herstellbar sind. Sie sollten weiterhin ausreichende thixotrope Eigenschaften bei geringen Zusätzen an Thixotropierungsmitteln aufweisen, als Alleinbindemittel aus aromatenfreier bzw. aromatenarmer Lieferform applizierbar sein, sowie bei Einsatz als Maler- und DIY-Lackbindemittel schleierfreie Lackfilmoberflächen mit hohen Glanzgraden gewährleisten. Für die Erzielung einer ausreichenden Ablaufbeständigkeit von in der Regel fremdvernetzbaren niedrig- und mittelöligen Alkydharzen sollte der Thixotropieträgergehalt maximal 16 Gew.-% betragen.

Überraschenderweise konnte diese Aufgabe mit dem nachstehend näher beschriebenen erfindungsgemäßen Verfahren gelöst werden.

Das erfindungsgemäße Verfahren unterscheidet sich von der Verfahrensweise gemäß DE-AS 1 669 137 insbesondere durch den Umstand, daß das als Thixotropieträger wirkende, Urethangruppen aufweisende Umsetzungsprodukt aus den Komponenten b1) und b2) in situ in zumindest einem Teil, vorzugsweise der Gesamtmenge des Alkydharzes hergestellt wird.

Gegenstand der Erfindung ist ein Verfahren zur Herstellung von thixotropen Lackbindemitteln auf Alkydharzbasis, bestehend im wesentlichen aus

a) 80 bis 98 Gew.-% Alkydharzen mit Ölgehalten von 20 bis 86 Gew.-% und

b) 2 bis 20 Gew.-% eines Thixotropieträgers aus

b1) seitenständige Alkylsubstituenten aufweisenden Polyisocyanaten eines Molekulargewichts von bis zu 1 000 und

b2) 1- und/oder 2 wertigen Alkoholen des Molekulargewichtsbereichs 32 bis 800,

dadurch gekennzeichnet, daß man den Thixotropieträger durch Umsetzung der Ausgangskomponenten b1) und b2) unter Einhaltung eines NCO/OH-Äquivalentverhältnisses von 2:1 bis 1:2 bei 50 bis 180°C in Gegenwart zumindest eines Teils des Alkyldharzes a), sowie gegebenenfalls in Gegenwart von inerten Losungsmitteln herstellt.

Gegenstand der Erfindung ist auch die Verwendung der nach diesem Verfahren erhaltenen, thixotropierten Bindemittel, gegebenenfalls in Kombination mit Vernetzerharzen als Bindemittel bzw. Bindemittelkomponente für Beschichtungsmittel.

Unter Alkydharzen versteht man durch Polykondensation nach bekannten Verfahren aus Alkoholen und Carbonsäuren hergestellte Polykondensate der Art, wie sie z.B. im Römpp's Chemielexikon, Bd. 1, S. 202, Frankh'sche Verlagsbuchhandlung, Stuttgart, 1966, definiert oder bei D.H. Solomon, The Chemistry of Organic Filmformers, S. 75-101, John Wiley & Sons Inc., New York, 1967, beschrieben sind.

Die beim erfindungsgemäßen Verfahren einzusetzende Komponente a) besteht aus ölmodifizierten Alkydharzen. Hierunter sind solche Alkydharze zu verstehen, die über Estergruppen eingebaute Monocarbonsäuren der nachstehend beispielhaft genannten Art enthalten. Die "Öllänge", bzw. der "Ölgehalt" bezeichnet die Menge dieser Monocarbonsäuren, berechnet als Triglycerid.

Für die Synthese der Alkydharze a) geeignete Säurekomponenten sind somit sowohl mehrbasische als auch einbasische Carbonsäuren, oder deren an der Veresterungsreaktion teilnehmenden Derivate wie beispielsweise die den Säuren entsprechenden Anhydride oder umesterungsfähige Ester.

Geeignete mehrbasische Carbonsäure bzw. mehrwertige Carbonsäurederivate sind aliphatische, cycloaliphatische gesättigte oder ungesättigte und/oder aromatische Polycarbonsäuren, vorzugsweise Di-, Tri- und Tetracarbonsäuren, mit 2 bis 14, vorzugsweise 4 bis 12 C-Atomen pro Molekül oder deren veresterungsfähige Derivate z.B. Phthalsäureanhydrid, Isophthalsäure, Terephthalsäure, Tetrahydro- und Hexahydrophthalsäureanhydrid, Endomethylentetrahydrophthalsäure, Bernsteinsäure, Glutarsäure, Sebacinsäure, Azelainsäure, Trimellithsäure und Trimellithsäureanhydrid und Pyromellithsäureanhydrid. Phthalsäureanhydrid ist die gebräuchlichste mehrbasische Säurekomponente.

Bei den einwertigen (einbasischen) Carbonsäuren bzw. Carbonsäurederivaten handelt es sich um gesättigte oder ungesättigte aliphatische oder cycloaliphatische und/oder um aromatische Monocarbonsäuren mit bis zu 24 Kohlenstoffatomen pro Molekül wie beispielsweise Benzoesäure, p-tert.-Butylbenzoesäure, p-Toluylensäure, Hexahydrobenzoesäure, Abietinsäure oder Milchsäure.

Vorzugsweise handelt es sich bei den einwertigen (einbasischen) Carbonsäure bzw. den entsprechenden Carbonsäurederivaten um pflanzliche oder tierische Öle, Fette oder Fettsäuren wie z.B. Kokos-, Erdnuß-, Ricinus-, Holz-, Oliven-, Sojabohnen-, Lein-, Bauwollsaat-, Safflöröl oder -ölfettsäuren, dehydratisiertes Ricinusöl bzw. -fettsäure, einfach ungesättigte Fettsäuren, Schmalz, Talg und Trane, Tallöl, sowie synthetische Fettsäuren, die durch Konjugierung oder Isomerisierung aus natürlichen ungesättigten Ölen oder Fettsäuren hergestellt sein können. Bevorzugte gesättigte Fettsäuren sind z.B. Kokosfettsäuren, 2-Ethylhexansäure, Isononansäure (3,4,4-Trimethylhexansäure) sowie Palmitin- und Stearinsäure und synthetische gesättigte verzweigte Fettsäuren.

Für die Synthese der Alkydharze geeignete Alkohole sind aliphatische, cycloaliphatische und/oder araliphatische Alkohole mit 1 bis 15, vorzugsweise 2 bis 6 C-Atomen, und 2 bis 6, vorzugsweise 2 bis 4, an nichtaromatische C-Atome gebundenen OH-Gruppen pro Molekül, z.B. Glykole wie Ethylenglykol, Propandiol-1,2 und -1,3, Neopentylglykol, 2,2-Trimethylpentandiol-1,3, Hexandiol-1,6, Cyclohexandiol-1,2 und -1,4, 1,2- und 1,4-Bis-(hydroxymethyl)-cyclohexan, Adipinsäure-bis-(ethylenglykolester); Etheralkohole wie Di- und Triethylenglykol, Dipropylenglykol; Dimethylolpropionsäure, oxalkylierte Bisphenole mit zwei $C_2$-$C_3$-Oxalkylgruppen pro Molekül, perhydrierte Bisphenole; Butantriol-1,2,4, Hexantriol-1,2,6, Trimethylolethan; Trimethylolpropan, Trimethylolhexan, Glycerin, Pentaerythrit, Dipentaerythrit, Mannit und Sorbit. Die gebräuchlichsten Alkohole sind Glycerin, Trimethylolpropan, Neopentylglykol und Pentaerythrit.

Die Alkydharze bzw. Polyester können auch einwertige Alkohole mit 1 bis 8 C-Atomen wie Methanol, Propanol, Cyclohexanol, 2-Ethylhexanol, Benzylalkohol in Mengen bis zu 15 Gew.-%, bezogen auf Alkydharz bzw. Polyester, einkondensiert enthalten.

In den Alkydharzen beträgt die Öllänge, berechnet als Triglycerid und bezogen auf das Alkydharz, in der Regel 20 bis 86, vorzugsweise 25 bis 82 Gew.-%. Die trocknenden oder nichttrocknenden Fettsäuren, die im allgemeinen 6 bis 24 C-Atome enthalten, werden bevorzugt, entsprechend den oben gemachten Ausführungen, als solche oder in Form ihrer Glycerinester (Triglyceride) eingesetzt.

Bei der beim erfindungsgemäßen Verfahren einzusetzenden Alkydharzkomponente a) kann es sich auch um Urethan-modifizierte Alkydharze handeln, die durch Umsetzung der beispielhaft genannten, ölmodifizierten Alkydharze mit Polyisocyanaten, insbesondere Diisocyanaten wie beispielsweise 2,4- und/oder 2,6-Diisocyanatotoluol,4,4'-Diisocyanatodiphenylmethan, Isophorondiisocyanat, Hexamethylendiisocyanat oder 4,4'-Diisocyanato-dicyclohexylmethan erhalten werden können. Diese an sich bekannte Modifizierung der Alkydharze kann vor oder im Anschluß an die erfindungsgemäße Tixotropierung erfolgen.

Das als Zahlenmittel bestimmte Molekulargewicht der als Komponente a) einzusetzenden Alkydharze liegt im allgemeinen bei 2 000 bis 20 000 (bis zu Molekulargewichten von 5 000 dampfdruckosmometrisch bestimmt in Dioxan und Aceton, wobei bei differierenden Werten der niedrigere Wert als korrekt angesehen wird; bei Molekulargewichten über 5 000 membranosmetrisch in Aceton bestimmt).

Als Polyisocyanatkomponente b1) kommen beliebige Alkyl-substituierte aliphatische, cycloaliphatische oder aromatische Di- oder Polyisocyanate eines unter 1 000 liegenden Molekulargewichts oder deren Gemische in Betracht. Beispielhaft genannt seien 2,4- und/oder 2,6-Diisocyanatotoluol, Alkyl-substituierte Phenylendiisocyanate der beispielsweise in DE-OS 3 105 776 genannten Art, 1-Isocyanato-3,3,5-trimethyl-5-isocyanatomethyl-cyclohexan (Isophorondiisocyanat = IPDI) oder 1,3,5-Triisopropyl-2,4-diisocyanato-benzol (= 1,3,5-Triisopropylbenzol-2,4-diisocyanat). Neben diesen einfachen Diisocyanaten können auch die entsprechenden Uretdiongruppen aufweisenden Dimerisierungsprodukte und/oder die entsprechenden Isocyanuratgruppen aufweisenden Trimerisierungsprodukte der einfachen Diisocyanate bzw. Gemische der Diisocyanate mit den genannten Derivaten eingesetzt werden.

Besonders bevorzugt besteht die Komponente b1) aus Isophorondiisocyanat oder aus 1,3,5-Triisopropylbenzol-2,4-diisocyanat oder aus Gemischen des letzteren mit bis zu 50 NCO-Äquivalentprozent an anderen Alkyl-substituierten Diisocyanaten.

Als Alkoholkomponente b2) kommen aliphatische, cycloaliphatische und/oder aromatische ein- und/oder zweiwertige Alkohole des Molekulargewichtsbereichs 32 bis 800, vorzugsweise 32 bis 750, in Betracht. Die Alkoholkomponente b2) weist vorzugsweise eine (mittlere) Hydroxylfunktionalität von 1 bis 2 auf. Dies bedeutet, es werden vor allem ein- oder zweiwertige bzw. Gemische derartiger Alkohole verwendet.

Geeignete einwertige Alkohole sind beispielsweise n-Hexanol, n-Hexenol, Cyclohexanol, Cyclohexenol, Cyclohexadien-ol-1, Benzylalkohol, Cetylalkohol, Stearylalkohol, Oleylalkohol, Linoleylalkohol, Diglyceride natürlicher Fette und Öle, Alkylalkohol, sowie die Veretherungsprodukte von Allylalkohol mit Polyolen mit mindestens 3 Hydroxylgruppen pro Molekül, wie z.B. Glycerin, Trimethylolpropan oder Pentaerythrit, die noch mindestens eine freie OH-Gruppe tragen. Beispielhaft genannt seien hier Trimethylolpropandiallylether, Glycerindiallylether, Pentaerythrittriallylether. Gut geeignet sind auch die entsprechenden Octadienylether polyfunktioneller Alkohole mit einer freien Hydroxylgruppe wie z.B. Bis-octadienyl-glycerinether, Bis-octadienyl-trimethylolpropylether, Tris-octadienyl-pentaerythritylether oder Penta-octadienyl-sorbitylether, die durch Umsetzung der zugrundeliegenden Alkohole mit Butadien unter Katalyse mit speziellen Palladium-Komplexen hergestellt werden.

Aus Komponente b2) geeignete zweiwertige Alkohole sind beispielsweise 1,12-Octadecandiol, 1,12-Octadecendiol, 1,4-Bis-hydroxylmethyl-cyclohexan, sowie die den obigen Ausführungen entsprechenden Umsetzungsprodukte von Allylalkoholen mit mindestens dreiwertigen Alkoholen, die in statischen Mitteln noch zwei Hydroxylgruppen aufweisen oder die den oben gemachten Ausführungen entsprechenden Umsetzungsprodukte von Butadien mit mindestens dreiwertigen Alkoholen die noch zwei freie Hydroxylgruppen aufweisen.

Besonders bevorzugt verwendet man als Komponente b2) den gemachten Ausführungen bezüglich des Molekulargewichts entsprechende Alkohole, ausgewählt aus der Gruppe bestehend aus (i) Allylalkohol (ii) im statistischen Mittel mindestens 1 bis 2 Hydroxylgruppen aufweisende Allylether mehrwertiger Alkohole, (iii) im statistischen Mittel mindestens 1 bis 2 Hydroxylgruppen aufweisende Octadienylether von mehrwertigen Alkoholen, (iv) Octadecandiol-1,12, (v) Octadecendiol-1,12, (vi) 1,4-Bis-hydroxymethyl-cyclohexan und (vii) Gemischen derartiger Alkohole mit sich selbst oder mit bis zu 50 Hydroxyl-Äquivalentprozent an anderen Alkoholen des Molekulargewichtsbereichs 32 bis 500.

Bei der Herstellung der Thixotropieträger aus den Ausgangskomponenten b1) und b2) kommen diese in solchen Mengenverhältnissen zum Einsatz, die einem NCO/OH-Äquivalentverhältnis, bezogen auf diese Ausgangskomponenten, von 2:1 bis 1:2, vorzugsweise von 0,8:1 bis 1,2:1 und besonders bevorzugt von 1:1 entsprechen. Die Umsetzung der Ausgangskomponenten b1) und b2) erfolgt im allgemeinen bei 50 bis 180°C, vorzugsweise bei 60 bis 160°C. Die vorzugsweise in Inertgasatmosphäre durchzuführende Umsetzung kann in Gegenwart von an sich bekannten Katalysatoren für die NCO/OH-Additionsreaktion durchgeführt werden.

Erfindungswesentlich ist, daß die Umsetzung in Gegenwart zumindest eines Teils des Alkydharzes a) vorgenommen wird. Dies bedeutet, daß bei der Umsetzung mindestens 50 Gew.-%, vorzugsweise die Gesamtmenge des zu thixotropierenden Alkydharzes zugegen sind. Falls nicht bereits während der Umsetzung die Gesamtmenge des Alkydharzes zugegen ist, wird die Restmenge nach erfolgter Thixotropierungsreaktion zugesetzt.

Es muß davon ausgegangen werden, daß bei der erfindungsgemäßen Umsetzung vor allem eine Additionsreaktion zwischen den Isocyanatgruppen der Komponente b1) und den Hydroxylgruppen der Komponente b2) abläuft, während eine Additionsreaction zwischen den Isocyanatgruppen der Komponente b1) und den gegenüber Isocyanatgruppen reaktionsfähigen Gruppen (Carboxyl- und Hydroxylgruppen) der Komponente a) allenfalls in untergeordnetem Umfang stattfindet. Dies ist vermutlich auf die wesentlich höhere Konzentration an Hydroxylgruppen der Komponente b2) und eventuell auch auf deren höhere Reaktivität gegenüber Isocyanatgruppen im Vergleich zu den genannten, gegenüber Isocyanatgruppen reaktionsfähigen Gruppen der Komponente a) zurückzuführen.

Das erfindungsgemäße Verfahren kann lösungsmittelfrei durchgeführt werden. Besonders bevorzugt ist jedoch die Durchführung der Umsetzung in Gegenwart eines inerten, vorzugsweise unpolaren oder schwach polaren Kohlenwasserstoff-Lösungsmittels. Besonders gut geeignet sind schwach polare, isoparaffinische Lösungsmittel, wie sie beispielsweise von der Firma Esso unter der Bezeichnung ®ISOPAR vertrieben werden.

Zur Durchführung der erfindungsgemäßen Umsetzung werden Alkydharz a), Alkohol b2) und gegebenenfalls Lösungsmittel vorgelegt und nach Erwärmen auf die vorgesehene Reaktionstemperatur unter Rühren und gegebenenfalls Zugabe von Katalysatoren durch Zutropfen des Polyisocyanats, gegebenenfalls zusammen mit weiteren Lösungsmitteln, thixotropiert.

Nach dem Abkühlen resultiert ein als Alleinbindemittel einsetzbares in der Regel oxidativ vernetzendes, thixotropes Bindemittel, das als solches der weiteren Verwendung für Überzugs-, Beschichtungs- und Abdichtmassen zugeführt werden kann.

In der Regel erfolgt die Vernetzungsreaktion des so hergestellten thixotropierten Bindemittels nach gegebenenfalls weiteren Modifikationen und gegebenenfalls unter Zugabe weiterer Zusatzstoffe nach der Applikation unter Einwirkung von Luftsauerstoff. Es können aber auch bei der Raumtemperatur reaktionsfähige Vernetzungskomponenten, wie z.B. Polyisocyanate zugesetzt werden. Hierbei resultieren 2-Komponenten-Polyurethan-Lacke. Die Umsetzung des thixotropen Bindemittels mit bei höheren Temperaturen wirksamen Vernetzern ist ebenfalls nicht ausgeschlossen. Zu Vernetzer dieser Art zählen vornehmlich:

mit Hydroxylgruppen zu Kondensationsreaktionen befähigte Aminoplastharze, wie Melamin-, Harnstoff- oder Guanidin-Formaldehyd-Kondensationsprodukte, wie sie beispielsweise in FR-PS 943 411 oder von D.H. Solomon in "The Chemistry of Organic Filmformers", Seite 235-240, John Wiley & Sons, Inc., New York, 1974, beschrieben sind;

mit Hydroxylgruppen zu Kondensationsreaktionen befähigte Phenoplastharze, wie Resole oder Novolake, wie sie z.B. in "Methoden der Organischen Chemie" (Houben-Weyl), Bd. 14/2, 4.Auflage, Georg Thieme Verlag, Stuttgart 1963, S. 193-292, beschrieben sind; und

Polyisocyanate, die die Isocyanatgruppen in verkappter Form enthalten.

Übliche Zusätze, die zur Herstellung der Lacke mitverwendet werden können, sind z.B. organische Losungsmittel wie beispielsweise Ethyl oder n-Butylacetat, 2-Methoxyethylacetat, Methylisobutylketon, Cyclohexanon, aromatische und/oder aliphatische Kohlenwasserstoff-Lösungsmittel oder deren Gemische, Sikkative, Verlaufsmittel, Hautverhinderungsmittel, Antischaummittel, Härtungskatalysatoren, UV-Absorber oder Stabilisatoren gegen thermischen bzw. oxidativen Abbau.

Die organischen Lösungsmittel werden vorzugsweise in Mengen unter 50, insbesondere unter 60 Gew.-%, bezogen auf Bindemittel und Vernetzer, eingesetzt.

Die Lacke können als Überzugsmittel für Substrate aller Art wie Holz, Kunststoffe, Leder, Textilien, Glas, Keramik, Metall, dienen. Sie lassen sich mit den üblichen Applikationsmethoden wie Spritzen, Streichen, Fluten, Gießen, Tauchen, Walzen aufbringen. Die Mengen werden im allgemeinen so gewählt, daß Trockenfilmdicken der Lackierungen (nach der Härtung) von 0,005 bis 0,10 mm resultieren.

Die erfindungsgemäßen thixotropen Überzugsmittel können je nach Art der Härtungsreaktion innerhalb des Temperaturbereichs von 0 bis 250°C gehärtet werden. Lufttrocknende Lacke und solche, die Vernetzer mit freien Isocyanatgruppen enthalten, werden in der Regel bei Temperaturen von 0 bis 130°C, vorzugsweise bei Raumtemperatur, ausgehärtet. Einbrennlacke, die als Vernetzer beispielsweise verkappte Polyisocyanate oder Aminoplaste enthalten, benötigen im allgemeinen Härtungstemperaturen von 60 bis 250°C. Dabei ist es maximal vorteilhaft, die Hartung zunächst bei Temperaturen unter 120°C zu beginnen und bei Temperaturen über 120°C zu Ende zu führen,

Die Überzugsmittel können sowohl als Klarlacke als auch als pigmentierte Lacke eingesetzt werden. Sie führen zu Lackierungen mit hohem Oberflächenglanz, hoher Deckkraft, ausgewogenem Härte-/Elastizitäts-Niveau, guter Wasser- und Chemikalienfestigkeit und gutem Bewitterungsverhalten.

Die in nachfolgenden Beispielen genannten Prozentangaben beziehen sich auf das Gewicht; Teile bedeuten Gewichtsteile.

EP 0 553 663 B1

## Beispiele

In den folgenden Beispielen werden folgende Alkydharze a) eingesetzt:

### Harz A

8 174 g Sojaölfettsäure, 2 520 g Pentaerythrit und 3 222 g Phthalsäureanhydrid werden in einem mit Rührer, Destillationsbrücke, Heizung und Stickstoffeinleitungsrohr ausgerüsteten 15-l-Reaktionskessel eingewogen und in 11 Stunden auf 230°C unter Durchleiten von 30 l Stickstoff/Stunde aufgeheizt und bei dieser Temperatur gehalten bis die theoretische Wassermenge abgespalten, und eine Auslaufzeit im DIN-4-mm- Becher vonn 55 sec (65 %ig in Xylol) erreicht worden ist. Das Harz wird bei 125°C in ®ISOPAR G[1)]gelöst, Nach dem Abkühlen resultiert eine ca. 75 %ige Harzlösung mit einer Säurezahl von 16,7 mg KOH/g, einer OH-Zahl von 26 mg KOH/g, einer Viskosität von 7 800 mPa.s bei 23°C und einer Iodfarbzahl von 2 (50 %ig in Xylol); Öllänge ca 66 Gew.-%.

### Harz B

In einem wie bei Harz A ausgerüsteten 15-l-Reaktionskessel werden 8 256 g Tallölfettsäure, 2 507 g Pentaerythrit, 3 060 g Phthalsäureanhydrid und 0,26 g Di-Butylzinnoxid eingewogen, unter Durchleiten von 8 l Stickstoff/Stunde in 9 Stunden auf 235°C aufgeheizt und bei dieser Temperatur gehalten bis die theoretische Wassermenge abgespalten, und eine Auslaufviskosität im 4-mm-DIN-Becher von 53 sec. (50 %ig in Benzin) erreicht worden ist,. Das Harz wird 60 %ig in ®ISOPAR G[1)]gelöst.
Es resultiert eine Harzlösung mit einer Säurezahl von 6,1 mg KOH/g, einer OH-Zahl von 35 mg KOH/g, einer Viskosität von 2 223 mPa.s und einer Iodfarbzahl von 3 (50%ig in Benzin); Öllange ca. 57 Gew.-%.

### Harz C

1 620 g $\alpha$-Ethylhexansäure, 3 230 g Trimethylolpropan, 817 g Adipinsäure, 131 g Maleinsäureanhydrid und 2 085 g Phthalsäureanhydrid werden in einem 10-l-Reaktor, ausgerüstet wie bei Harz A, eingewogen, unter Durchleiten von 5 l Stickstoff/Stunde auf 240°C aufgeheizt und bei dieser Temperatur gehalten bis eine Auslaufviskosität im 4-mm-DIN-Becher von 42 sec. (50 %ig in Xylol) und eine Säurezahl von 11 mg KOH/g erreicht worden ist. Nach dem Abkühlen auf 100°C wird das Harz in Xylol gelöst, so daS eine 85 %ige Lösung in Xylol erhalten wird. Diese Lösung weist eine Säurezahl von 10 mg KOH/g, eine OH-Zahl von 124 mg KOH/g, eine Viskosität von 9 785 mPa.s bei 23°C und eine Hazen-Farbzahl von 80 APHA auf; Öllänge: ca 26 Gew.-%.

### Herstellung der thixotropen Bindemittel

Mit Ausnahme der Vergleichsbeispiele werden die thixotropen Bindemittel in einer "in situ-Reaktion" mit dem organischen Thixotropieträger versehen. Dabei werden die Harzlösungen mit dem Alkohol b2), der in der nachfolgenden Tabelle für jedes Beispiel angegeben ist, in einem, je nach Ansatzgröße 1 l- bis 4 l- Glaskolben bzw. in einem 15 l-Reaktor versetzt und unter Überleiten von ½ Kesselvolumen Stickstoff/Stunde in einer Stunde auf 135°C aufgeheizt. Bei dieser Temperatur wird das Polyisocyanat b1) in einer Stunde zugegeben und der Ansatz für weitere 11 Stunden bei 135°C gerührt. Nach dem Abkühlen wird mit Lösungsmittel auf den angegebenen Festgehalt eingestellt und die übrigen in der Tabelle aufgeführten Kennzahlen bestimmt.

[1)]®ISOPAR G = aromatenfreies, synthetisches Isoparaffingemisch der Fa. Esso AG mit einem Siedebereich von 155 bis 173°C und einem Flammpunkt von 39°C.

6

## Tabelle 1

| Beispiele | 1 | 2 | 3 | 4 | 5 | 6 | 7 | 8 | 9 |
|---|---|---|---|---|---|---|---|---|---|
| Harz A | 9646 | - | 330 | - | 330,1 | - | 1205,8 | 1999,5 | - |
| Harz B | - | 667,5 | - | 333,4 | - | 333,4 | - | - | - |
| Harz C | - | - | - | - | - | - | - | - | 2154,8 |
| **Polyisocyanate b1)** | | | | | | | | | |
| 1,3,5-Triisopropylbenzol-2,4-diisocyanat | 197 | 10,9 | 8,0 | 5,1 | 5,5 | 4,6 | - | 38,2 | 72,3 |
| Isophorondiisocyanat | - | - | - | - | - | - | 31,9 | - | - |
| **Polyole b2)** | | | | | | | | | |
| 1,12-Octadecandiol | 388 | 21,6 | - | - | - | - | 41,2 | - | - |
| Cyclohexandimethanol | - | - | - | - | - | - | - | - | 72,3 |
| Trimethylolpropandiallylether | - | - | 12,0 | - | - | - | - | - | - |
| Glycerinbisoctadienylether [1] | - | - | - | 11,6 | - | - | - | - | - |
| Trimethylolpropanbisoctadienyl-[2] ether | - | - | - | - | 14,4 | 12,0 | - | - | - |
| HD-Ocenol 110/130 [3] | - | - | - | - | - | - | - | 75,2 | - |
| **Kennzahlen** | | | | | | | | | |
| Feststoffgehalt (Gew.-%) | 65,6 | 62,5 | 78,0 | 63,6 | 77,7 | 63,9 | 65,6 | 65,5 | 67,5 |
| Grundviskosität (mPa.s) [4] | 1725 | 722 | 180 | 815 | 195 | 672 | 2388 | 848 | 317 |
| Säurezahl (mg KOH/g) | 12,2 | 5,1 | 10,4 | 6,4 | 13,4 | 7,7 | 6,8 | 12,6 | 5,9 |
| Hydroxylzahl (mg KOH/g) | 29 | 42 | 16,9 | 36 | 23,4 | 32,9 | 14 | 7 | 100 |
| Thixotropieträgerzusatz (%) | 8,09 | 8,11 | 8,08 | 8,35 | 8,04 | 8,30 | 8,08 | 7,56 | 8,94 |

[1] Hydroxylzahl des Glycerinbisoctadienylethers: 172 mg KOH/g

[2] Hydroxylzahl des Trimethylolbisoctadienylethers: 151 mg KOH/g

[3] ®HD-Ocenol 110/130 = Fettalkohol der Fa. Henkel, Gemisch aus Oleyl-Linoleyl-Alkohol, Iodzahl ca. 120, Hydroxylzahl ca. 210.

[4] Grundviskosität: Die Grundviskosität wurde in einem Rotationsviskosimeter der Firma Hacke vom Typ Rotovisco® RV 20 mit dem Meßsystem M 5 unter Benutzung des Drehkörpers SV (DIN 53 019) bestimmt. Dabei wurde die Probe bei maximalem Schergefälle (D = 645 $S^{-1}$) solange geschert, bis der niedrigste Wert erreicht war.

EP 0 553 663 B1

### Vergleichsbeispiel 1

### a) Herstellung des Thixotropieträgers

In einem mit Rührer, Heiz- und Kühleinrichtung sowie Tropftrichter ausgerüsteten 1-l-Glaskolben werden 664 g 1,12-Octadecandiol vorgelegt, unter Überleiten von 1 l Stickstoff/Stunde auf 150°C aufgeheizt und über 2 Stunden mit 336 g 1,3,5-Triisopropylbenzoldiisocyanat-2,4 (Tropftrichter) versetzt. Das Reaktionsgemisch wurde solange auf Reaktionstemperatur gehalten bis der Isocyanatgehalt kleiner als 0,03 Gew.-% war. Es resultierte ein milchig-weißer Feststoff mit einer OH-Zahl von 106 mg KOH/g.

### b) Herstellung des thixotropen Bindemittels

2 004 g der im Beispiel 1 verwendeten 75 %igen Harzlösung des Harzes A werden in einem wie im Beispiel 1 ausgerüsteten 4-l-Reaktionskolben eingewogen und auf 150°C aufgeheizt. Dann werden 122 g des separat hergestellten Thixotropieträgers portionsweise in kleinen Stücken zugegeben und unter Rühren und Überleiten von 4 l Stickstoff/Stunde innerhalb von 6 Stunden eingelöst bis eine homogene Lösung resultiert. Die so thixotropierte Harzlösung wird mit weiteren 374 g Isopar G versetzt und abgekühlt. Nach dem Abkühlen wird eine trübe Lösung mit einem Feststoffgehalt von 65,9 Gew.-%, einer Grundviskosität von 1 874 mPa.s bei 23°C, einer Säurezahl von 7,9 mg KOH/g und einer OH-Zahl von 17 mg KOH/g erhalten.

### c) Herstellung von Weißlacken

Die folgende Tabelle gibt die Zusammensetzung in g von Weißlacken wieder, die einer vergleichenden lacktechnischen Prüfung unterworfen worden sind.

| Formulierung[5] | 1 | 2 |
|---|---|---|
| thixotropes Harz aus Beispiel 1, 65,6 %ig in Isopar G | 53,1 | - |
| thixotropes Harz aus Vergleichsbeispiel 1, 65,9 %ig in Isopar G | - | 53,0 |
| Octa-Soligen Calcium 4[6] | 1,7 | 1,7 |
| Bayertitan R-KB-2[7] | 27,3 | 27,0 |
| Isopar G | 14,8 | 14,5 |
| Octa-Soligen Kobalt 6[6] | 0,3 | 0,3 |
| Octa-Soligen Zirkon 18[6] | 2,1 | 2,1 |
| Baysilone-Lackadditiv OL 17[8] | 0,2 | 0,2 |
| Ascinin R, konz.[9] | 0,5 | 0,3 |
| Feststoffgehalt des Lackes (%) | 64,0 | 64,0 |
| Bindemittel-Pigment-Verhältnis | 1:0,8 | 1:0,8 |

[5] Formulierung 1 = thixotroper Weißlack erfindungsgemäß
Formulierung 2 = thixotroper Vergleichs-Weißlack auf Basis des Vergleichsbeispiels 1
[6] ®Octa-Soligen = Handelsprodukt der Fa Borchers AG; Metalloctoate mit Metallgehaltkennzeichnung
[7] ®Bayertitan R-KB-2 = Handelsprodukt der Bayer AG, Titandioxid
[8] ®Baysilone OL 17 = Handelsprodukt der Bayer AG; Verlaufshilfsmittel auf Siliconbasis
[9] ®Ascinin, konz. = Handelsprodukt der Bayer AG; Methyl-ethylketoxim, Hautverhinderungsmittel

### Lacktechnische Prüfungen von Weißlacken

Das jeweilige Bindemittel und Octa-Soligen Calcium 4 wurden vorgelegt und Bayertitan R-KB-2 unter Rühren zugegeben. Anschließend wurde 10 Minuten in einer Perlmühle bei 5 000 U/min. dispergiert.

Nach dem Dispergiervorgang wurde das jeweils erforderliche Lösemittel zugegeben und unter langsamen Rühren gemischt. Nach 2 Stunden Abkühlzeit wurden die noch verbleibenden Agenzien in der angegebenen Reihenfolge unter Rühren eingetragen.

Die Prüfungen erfolgten nach einer Reifezeit der Lacke von jeweils 3 Tagen durch Aufstreichen auf Glas und Prüfkarton in einer Schichtdicke von 120 μm Naßfilmdicke.

| Formulierung | 1 | 2 |
|---|---|---|
| Sandtrocknung (min) | 65 | 80 |
| Pendeldämpfung (s) | | |
| nach 1 d | 23 | 15 |
| nach 3 d | 45 | 27 |
| Glanz (Gardner <20°C) | | |
| nach 3 d Raumtemperatur | 79 | 45 |
| nach 7 d bei 70°C | 69 | 32 |
| Weißgrad (ASTM E 313) | | |
| nach 3 d Raumtemperatur | 77 | 75 |
| nach 7 d bei 70°C | 65 | 64 |
| Verarbeitbarkeit | sehr gut | gut |
| Thixotropie | sehr gut | gut |
| Verlauf | sehr gut | mäßig |
| Oberfläche | brillant | unruhig |

Die Vorteile des thixotropen Weißlackes des erfindungsgemäßen Beispiels (Formulierung 1) gegenüber dem Weißlack des Vergleichsbeispiels (Formulierung 2) liegen einmal in der einfachen, reproduzierbaren Herstellung des thixotropen Bindemittels in einem Eintopfverfahren. Lacktechnische Vorteile sind in der schnelleren Trocknung, der höheren Härte und des höheren Weißgrades zu erzielen, die durch die sehr guten Verlaufs- und Verarbeitungseigenschaften des Lackes bei sehr guter Thixotropie ergänzt werden.

Dadurch können auf diese Weise thixotropierte Lackharze als Alleinbindemittel eingesetzt werden, die hochglänzende Lackfilmoberflächen ergeben, was mit den bisher üblichen thixotropen Bindemitteln nicht möglich war.

**Vergleichsbeispiel 2**

**a) Herstellung des Thixotropieträgers analog Beispiel 1 DE-AS 1 669 137**

Zu 572 Gewichtsteilen Octadekandiol-1,12 werden unter Rühren bei 150 bis 160°C unter $N_2$ in 2 Stunden 286 Gewichtsteile 1,3,5-Triisopropylbenzoldiisocyanat-2,4 zugetropft. Es wird bei dieser Temperatur 4 bis 6 Stunden nachgerührt, bis der NCO-Wert auf 0 abgesunken ist. Das Produkt ist ein hellgelbes, hartwachsartiges Harz mit einer Erweichungstemperatur von 120 bis 126°C und einer Säurezahl von 0,3 mg KOH/g.

**b) Herstellung des thixotropen Alkydharzes**

Analog Beispiel 1 b) der DE-AS 1 669 137 (Spalte 5) wird unter Verwendung des Harzes C das thixotrope Alkydharz hergestellt, indem zu 2 200 Gew.-Teilen der xylolischen Lieferform des Harzes C) 350 Gew.-Teile des Thixotropieträgers aus a) in Form kleiner Stücke hinzugegeben und unter langsamen Rühren in einem 3-l-Glaskolben auf 150°C in einer Stickstoffatmosphäre erwärmt werden. Bei dieser Temperatur resultiert nach ca. 5 Stunden ein klares, homogenes Gemisch, das nach weiteren 6 Stunden Rühren klar bleibt Die auf 60 Gew.-% mit Xylol eingestellte Lösung ist stark thixotrop und weist einen Thixotropieträgergehalt von 21,12 Gew.-% auf.

**c) Herstellen von Einbrennlacken**

Die folgende Tabelle gibt die Zusammensetzung in Gewichtsteilen von Einbrennlacken wieder, die als Hammerschlageffektlacke in 30 Minuten bei 120°C ausgehärtet und analog Beispiel 1 c) der DE-AS 1 669 137 formuliert wurden:

| Formulierung[10] | | 1 | 2 |
|---|---|---|---|
| 60 %ige Lösung des Vergleichsbeispiels 2 b) in Xylol | | 57,20 | - |
| 60 %ige Lösung des Beispiels 9 in Xylol | | - | 57,20 |
| Aluminiumbronzepaste[11] | | 3,42 | 3,42 |
| Siliconöl[12], 1 %ig in Xylol | | 0,86 | 0,86 |
| Siliconöl als Effektgeber[13], 10 %ig in Xylol | | 0,14 | 0,14 |
| Lösemittel: | Xylol | 10,30 | 10,30 |
| | Butylacetat | 3,40 | 3,40 |
| | Butanol | 2,20 | 2,20 |
| | Glycolsäurebutylester | 1,20 | 1,20 |
| | Ethylglycolacetat | 2,98 | 2,98 |
| Harnstoff-Formaldehydharz[14] | | 16,10 | 16,10 |

[10] Formulierung 1: Einbrennlack des Vergleichsbeispiels 2
Formulierung 2: Einbrennlack des erfindungsgemäßen Beispiels 9
[11] ®Stapa 88 = Aluminiumbronzenpaste der Fa. Eckart-Werke, 65 %ig in Testbenzin/Solventnaphta, durchschnittl. Teilchengröße 8 $\mu$m
[12] ®Baysilon-Lackadditiv MA = Niedermolekulares Methylpolysiloxan als Verlaufsmittel; Handelsprodukt der Bayer AG;
[13] ®Baysilon-Lackadditiv MEF = Hochmolekülares Methylpolysiloxan als Effektgeber; Handelsprodukt der Bayer AG;
[14] ®Plastobal EBS 400 = Isobutanol-verethertes Harnstoff-Formaldehydharz, 60 %ig in Isobutanol; Handelsprodukt der BASF AG.

Die Formulierungen 1 und 2 werden auf Glasplatten in einer Naßfilmschichtdicke von 240 $\mu$m aufgerakelt und stehend in einen Einbrennofen innerhalb von 30 Minuten bei 120°C eingebrannt. Die Trockenfilmschichtdicken wiesen mit ca. 50 $\mu$m an der oberen Kante und ca. 50 $\mu$m an der unteren Kante der Glasplatte keine Abweichungen bei beiden Formulierungen auf, was für ein optimales Ablaufverhalten spricht.

Dabei wurde der Effekt im Falle des Vergleichsbeispiels nach DE-AS 1 669 137 mit einem separat hergestellten und in einem zweiten Verfahrensschritt eingearbeiteten Thixotropieträger in einer Menge von 21,12 % erzielt, während das erfindungsgemäße thixotrope Bindemittel (Beispiel 9) in einer "in-situ-Reaktion" thixotropiert worden ist und mit einem Thixotropieträgergehalt von 8,94 Gew.-% um mehr als 56 % unter dem Trägergehalt des Vergleichsbeispiels liegt. Dieser Effekt ist einmal auf das weniger aufwendige Verfahren aber auch auf die andere chemische Zusammensetzung des Thixotropieträgers zurückzuführen.

**Verwendungsbeispiel**

**Herstellung eines thixotropen Polyurethanlackes**

Zu 540 g der 67,5 %igen Lösung des Harzes C werden 255 g ®Desmodur N 75[15] gegeben. Nach Zusatz von 0,02 Teilen Dibutylzinnoxid wird aus der mit Xylol auf eine Auslaufviskosität von 100 Sekunden im DIN-4-mm-Becher eingestellten Klarlackmischung ein Lackfilm in einer Schichtdicke von 100 $\mu$m auf eine Glasplatte aufgerakelt, die senkrecht bei Raumtemperatur getrocknet wurde.

Nach ca. 6 Stunden wird ein klebfreier klarer Lackfilm mit belastbarer Filmoberfläche erhalten.

Die Trockenfilmschichtdicke des Lackfilmes war mit ca. 50 $\mu$m im oberen und unteren Teil der senkrecht aufgestellten Glasplatte gleich, so daß während des Trockenprozesses kein Ablaufen des Lackfilms erfolgt ist.

[15] ®Desmodur N 75 = Handelsprodukt der Bayer AG, 75 %ige Lösung mit einem Isocyanatgehalt von 16,5 % eines Biurethpolyisocyanats auf Basis von Hexamethylendiisocyanat in Methoxypropylacetat/Xylol (Gew.-Verhältnis 1:1).

**Patentansprüche**

1. Verfahren zur Herstellung von thixotropen Lackbindemitteln auf Alkydharzbasis, bestehend im wesentlichen aus
    a) 80 bis 98 Gew.-% Alkydharzen mit Ölgehalten von 20 bis 86 Gew.-% und
    b) 2 bis 20 Gew.-% eines Thixotropieträgers aus
        b1) seitenständige Alkylsubstituenten aufweisenden Polyisocyanaten eines Molekulargewichts von bis zu 1 000 und
        b2) 1- und/oder 2wertigen Alkoholen des Molekulargewichtsbereichs 32 bis 800,
    dadurch gekennzeichnet, daß man den Thixotropieträger durch Umsetzung der Ausgangskomponenten b1) und b2) unter Einhaltung eines NCO/OH-Äquivalentverhältnisses von 2:1 bis 1:2 bei 50 bis 180°C in Gegenwart zumindest eines Teils des Alkydharzes a), sowie gegebenenfalls in Gegenwart von inerten Lösungsmitteln herstellt.

2. Verfahren gemäß Anspruch 1, dadurch gekennzeichnet, daß man als Komponente b1) 1,3,5-Triisopropylbenzol-2,4-diisocyanat, gegebenenfalls in Abmischung mit bis zu 50 NCO-Äquivalentprozent an anderen Alkyl-substituierten Diisocyanaten verwendet.

3. Verfahren gemäß Anspruch 1 und 2, dadurch gekennzeichnet daß man als Komponente b2) Alkohole, ausgewählt aus der Gruppe bestehend aus (i) Allylalkohol (ii) im statistischen Mittel mindestens 1 bis 2 Hydroxylgruppen aufweisende Allylether mehrwertiger Alkohole, (iii) im statistischen Mittel mindestens 1 bis 2 Hydroxylgruppen aufweisende Octadienylether von mehrwertigen Alkoholen, (iv) Octadecandiol-1,12, (v) Octadecendiol-1,12, (vi) 1,4-Bis-hydroxymethyl-cyclohexan und (vii) Gemischen derartiger Alkohole mit sich selbst oder mit bis zu 50 Hydroxyl-Äquivalentprozent an anderen Alkoholen des Molekulargewichtsbereichs 32 bis 500 verwendet.

4. Verfahren gemäß Anspruch 1 bis 3, dadurch gekennzeichnet, daß man bei der Herstellung des Thixotropieträgers die Mengenverhältnisse der Komponenten b1) und b2) so bemißt, daß ein NCO/OH-Äquivalentverhältnis von 0,8:1 bis 1,2:1 vorliegt.

5. Verwendung der gemäß Anspruch 1 bis 4 erhaltenen, thixotropierten Bindemittel, gegebenenfalls in Kombination mit Vernetzerharzen als Bindemittel bzw. Bindemittelkomponente für Beschichtungsmittel.

**Claims**

1. Process for the production of thixotropic lacquer binders based on alkyd resins substantially consisting of
    a) 80 to 98 wt.% of alkyd resins with oil contents of 20 to 86 wt.% and
    b) 2 to 20 wt.% of a thixotroping agent prepared from
        b1) polyisocyanates of a molecular weight of up to 1,000 with lateral alkyl substituents and
        b2) mono- and/or dihydric alcohols of the molecular weight range from 32 to 800,
    characterised in that the thixotropic agent is produced by reacting the starting components b1) and b2) while maintaining an NCO/OH equivalent ratio of 2:1 to 1:2 at 50 to 180°C in the presence of at least part of the alkyd resin a), optionally also in the presence of inert solvents.

2. Process according to claim 1, characterised in that 1,3,5-triisopropylbenzene 2,4-diisocyanate is used as component b1), optionally mixed with up to 50 NCO equivalent percent of other alkyl-substituted diisocyanates.

3. Process according to claims 1 and 2, characterised in that the alcohols used as component b2) are selected from the group comprising (i) allyl alcohol, (ii) allyl ethers of polyhydric alcohols having a statistical average of at least 1 to 2 hydroxyl groups, (iii) octadienyl ethers of polyhydric alcohols having a statistical average of at least 1 to 2 hydroxyl groups, (iv) 1,12-octadecanediol, (v) 1,12-octadecenediol, (vi) 1,4-bis-hydroxymethylcyclohexane and (vii) mixtures of such alcohols with each other or with up to 50 hydroxyl equivalent percent of other alcohols of the molecular weight range from 32 to 500.

4. Process according to claims 1 to 3, characterised in that the quantity ratios of b1) and b2) used in production of the thixotroping agent are calculated such that an NCO/OH equivalent ratio of 0.8:1 to 1.2:1 is present.

5. Use of the thixotroped binders obtained according to claims 1 to 4, optionally combined with crosslinking resins, as a binder or binder component for coating compositions.

**Revendications**

1. Procédé pour la préparation de liants thixotropiques pour peintures et vernis à base de résines alkydes, qui consistent essentiellement en :

a) 80 à 98 % en poids de résines alkydes à des teneurs en huile de 20 à 86 % en poids et

b) 2 à 20 % en poids d'un composant conférant les propriétés thixotropiques, obtenu à partir de

b1) des polyisocyanates à substituants alkyles latéraux de poids moléculaire allant jusqu'à 1 000 et

b2) des alcools mono et/ou divalents de poids moléculaire 32 à 800,

caractérisé en ce que l'on prépare le composant conférant les propriétés thixotropiques par réaction des composants de départ b1) et b2) à des proportions correspondant à un rapport de 2:1 à 1:2 entre les équivalents de groupes NCO et les équivalents de groupes OH, à des températures de 50 à 180°C, en présence d'une partie au moins de la résine alkyde a) et le cas échéant en présence de solvants inertes.

2. Procédé selon la revendication 1, caractérisé en ce que l'on utilise en tant que composant b1) le 1,3,5-triisopropylbenzène-2,4-diisocyanate éventuellement en mélange avec une proportion allant jusqu'à 50 équivalents % de NCO, d'autres diisocyanates à substituants alkyles.

3. Procédé selon les revendications 1 et 2, caractérisé en ce que l'on utilise en tant que composant b2) des alcools choisis dans le groupe consistant en (i) l'alcool allylique, (ii) des éthers allyliques d'alcools polyvalents contenant en moyenne statistique au moins un à deux groupes hydroxy, (iii) des éthers octadiényliques d'alcools polyvalents contenant en moyenne statistique au moins un à deux groupes hydroxy, (iv) l'octadécanediol-1,12, (v) l'octadécènediol-1,12, (vi) le 1,4-bis-hydroxyméthylcyclohexane et (vii) des mélanges de ces alcools entre eux ou avec une proportion allant jusqu'à 50 équivalents % de groupes hydroxy d'autres alcools de poids moléculaire 32 à 500.

4. Procédé selon les revendications 1 à 3, caractérisé en ce que, à la préparation du composant conférant les propriétés thixotropiques, on règle les proportions des composants b1) et b2) correspondant à un rapport de 0,8:1 à 1,2:1 entre les équivalents de groupes NCO et les équivalents de groupes OH.

5. Utilisation des liants thixotropiques obtenus selon les revendications 1 à 4, éventuellement en combinaison avec des résines réticulantes, en tant que liants ou composants de liants pour produits de revêtement.